# EUROPÄISCHE PATENTSCHRIFT

(11) **EP 0 885 059 B1**
(45) Veröffentlichungstag und Bekanntmachung des Hinweises auf die Patenterteilung: **03.11.1999**
(21) Anmeldenummer: 97903366.9
(22) Anmeldetag: 24.02.1997
(51) Int. Cl.: B01J 13/00

(54) **VERFAHREN ZUR UNTERKRITISCHEN TROCKNUNG VON AEROGELEN**
PROCESS FOR SUB-CRITICALLY DRYING AEROGELS
PROCEDE DE SECHAGE SOUS-CRITIQUE D'AEROGELS

(30) Priorität: 05.03.1996 US 611058
(43) Veröffentlichungstag der Anmeldung: 23.12.1998
(73) Patentinhaber: Hoechst Research & Technology Deutschland GmbH & Co. KG, 65929 Frankfurt am Main (DE)
(72) Erfinder: FORBERT, Rainald, D-65439 Flörsheim (DE); ZIMMERMANN, Andreas, D-64347 Griesheim (DE); SMITH, Douglas, M., Albuquerque, NM 87106 (US); ACKERMAN, William, Albuquerque, NM 87120 (US)
(74) Vertreter: Luderschmidt, Schüler & Partner GbR
(86) Internationale Anmeldenummer: EP9700879
(87) Internationale Veröffentlichungsnummer: WO9732662

(56) Entgegenhaltungen:
- WO-A-94/25149
- DE-A- 4 316 540

## Beschreibung

Aerogele sind hochporöse Materialien mit niedriger Dichte, die durch Bildung eines Gels und anschließende Entfernung der Flüssigkeit unter weitgehender Erhaltung der Gelstruktur hergestellt werden.

Nach einer enger gefaßten Definition (siehe z.B. Gesser und Goswanni, Chem. Rev. 1989, 89, 767) versteht man unter Aerogelen Materialien, bei denen die Flüssigkeit aus dem Gel unter überkritischen Bedingungen entfernt wurde, während man bei Geltrocknung unter unterkritischen Bedingungen von Xerogelen und im Falle der Entfernung der Flüssigkeit aus dem gefrorenen Zustand durch Sublimation von Kryogelen spricht.

Aerogele im Sinne der Erfindung umfassen all diese Materialien und können außer Luft auch beliebige andere Gase enthalten. Die Gase können auch unter Vakuum aus dem Aerogel entfernt werden.

Übliche Aerogele enthalten im allgemeinen Silizium- oder Metalloxid, und zeichnen sich durch besonders niedrige Dichten von 20 bis 300 kg/m³ bei sehr hohen inneren Oberflächen von über 500 m²/g aus. Aufgrund dieser Eigenschaften eignen sie sich in hervorragender Weise als Wärme- und Schalldämmstoffe, als Katalysatorträger und als Adsorbentien.

Die Herstellung von Aerogelen kann nach dem Stand der Technik auf verschiedenen Wegen über einen Sol-Gel-Prozeß mit anschließender überkritischer oder unterkritischer Trocknung erfolgen, wobei das Gel vor der Trocknung als Hydrogel (Porenflüssigkeit ist Wasser) oder als Lyogel (Porenflüssigkeit ist ein organisches Lösungsmittel) vorliegen kann.

Alle unterkritischen Verfahren zur Trocknung von Lyogelen zu Aerogelen nach dem Stand der Technik stellen die zur Verdampfung des Lösungsmittels erforderliche Wärme durch Kontakt mit einer beheizten Fläche (Kontakttrocknung), durch elektromagnetische Wellen (z.B. Mikrowellentrocknung) oder durch das Überströmen mit einem Gas (Konvektionstrocknung) (siehe z.B. DE-A- 43 16 540) bereit. Da niedrige Dichten für die Anwendung von Aerogelen zur Wärmeisolierung notwendig sind, besitzen die Lyogele vor der Trocknung nur sehr geringe Feststoffgehalte (z.B. 6 bis 8% SiO₂). Die übrigen 92 bis 94% des Gels sind Lösungsmittel, das verdampft werden muß. Die Wärmeübertragung zur Trocknung bereitet im vorliegenden Fall Schwierigkeiten, da Aerogele ausgezeichnete Wärmeisolatoren sind. Außer bei den sehr energie- und kostenaufwendigen dielektrischen Trocknungsverfahren schirmen die bereits trockenen Aerogel-Partikel die zur Trocknung erforderliche Wärmezufuhr so gut von den feuchten Partikeln ab, daß mit den herkömmlichen Verfahren trotz hoher Temperaturgradienten nur sehr zeitaufwendige Trocknungsabläufe möglich sind. Dies führt im technischen Maßstab zwangsläufig zu kostenintensiven großen Trocknern und schlechter Wärmeausnutzung.

Der Erfindung lag daher die Aufgabe zugrunde, ein Verfahren zur Trocknung von Lyogelen zu Aerogelen bereitzustellen, das die Nachteile der bekannten Trocknungsverfahren nicht aufweist und technisch gut durchführbar ist.

Es wurde nun überraschend gefunden, daß Wärme von einer Flüssigkeit an die darin verteilten lösungsmittelfeuchten Gelpartikel so gut übertragen wird, daß die Partikel von dem ausströmenden Dampf vor dem Eindringen der umgebenden Wärmeträgerflüssigkeit in die poröse Feststoffstruktur geschützt werden und daß die Trocknung trotz geringer Temperaturgradienten in einem Bruchteil der sonst für Aerogele erforderlichen Trocknungszeit erfolgt.

Gegenstand der Erfindung ist somit ein Verfahren zur unterkritischen Trocknung eines Lyogels zu einem Aerogel, das dadurch gekennzeichnet ist, daß man das Lyogel mit einer Wärmeträgerflüssigkeit behandelt, die eine Temperatur oberhalb der Siedetemperatur der Porenflüssigkeit des Lyogels unter Systemdruck aufweist, und das getrocknete Aerogel anschließend von der Wärmeträgerflüssigkeit abtrennt.

Mit dem erfindungsgemäßen Verfahren können Lyogele auf kostengünstige Weise und unter hoher Wärmeausnutzung zu Aerogelen getrocknet werden.

Als Ausgangsprodukt für das erfindungsgemäße Verfahren sind aus den bekannten Synthesewegen grundsätzlich alle organischen und anorganischen Lyogele geeignet, die als Vorstufe für ein Aerogel verwendet werden können (siehe z.B. Jeffrev Brinker, George W. Scherer, Sol/Gel Science: The Physics and Chemistry of Sol/Gel Processing, Academic Press Ltd., London 1990; US-A 5,081,163; US-A 4,873,218; US-A 4,997,804). Als Ausgangsstoffe werden beispielsweise Siliziumverbindungen, Melaminformaldehydverbindungen, Resorzinharze, Phenolharze, Aminoplaste, Harnstoff-Formaldehydharze, sowie Kompositmaterialien, bestehend aus einem der oben beschriebenen Gele in Verbindung mit einem technischen Kunststoff, z.B. Polystyrol, verwendet.

Bevorzugt sind dabei SiO₂-Lyogele, die durch Oberflächenmodifikation hydrophobisiert wurden (siehe z.B. WO-A 94/25 149).

Es ist vorteilhaft, wenn zur Trocknung eine Wärmeträgerflüssigkeit gewählt wird, die die trockenen Partikel kaum oder nicht benetzt.

Ebenfalls ist es vorteilhaft, wenn die Wärmeträgerflüssigkeit nicht oder nur teilweise mit der Porenflüssigkeit, d.h. dem Lösungsmittel des Lyogels, mischbar ist.

Die Temperaturdifferenzen zwischen der Wärmeträgerflüssigkeit und der Siedetemperatur der Porenflüssigkeit des Lyogels unter Systemdruck beträgt vorzugsweise mindestens 1°C, besonders bevorzugt mindestens 10°C, insbesondere mindestens 30°C.

Als Wärmeträgerflüssigkeit eignen sich vorzugsweise Wasser oder wäßrige Lösungen, beispielsweise eine Kochsalzlösung.

Die zu trocknenden Gele liegen üblicherweise in, vorzugsweise technischen, organischen Lösungsmitteln vor, beispielsweise Alkoholen, mit vorzugsweise 1 bis 8 Kohlenstoffatomen, Ethern, Ketonen, wie Aceton, Estern, halogenierten Kohlenwasserstoffen, wie Methylenchlorid oder Chloroform, oder Kohlenwasserstoffen, vorzugsweise aliphatischen Kohlenwasserstoffen, wie Hexan oder Heptan.

Zur Durchführung des erfindungsgemäßen Verfahrens kann das Lyogel beispielsweise mit einer pneumatischen Förderung in die Wärmeträgerflüssigkeit eingebracht werden, wobei als Fördermedium sowohl ein Gas, wie Luft, als auch eine Flüssigkeit, wie die Wärmeträgerflüssigkeit oder die Porenflüssigkeit, vorzugsweise die Wärmeträgerflüssigkeit, dient. Hat die Porenflüssigkeit des Lyogels eine höhere Dichte als die Wärmeträgerflüssigkeit, kann das Lyogel einfach auf die Oberfläche der Wärmeträgerflüssigkeit aufgebracht werden. Die Wärmeträgerflüssigkeit kann dabei in einem Bad, beispielsweise in einem Flotationsbecken, vorliegen oder auch im Umpump betrieben werden.

Eine bevorzugt Ausführungsform ist dadurch gekennzeichnet, daß das getrocknete Aerogel unter Ausnutzung des Dichteunterschieds zwischen feuchtem und getrocknetem Material aus der Wärmeträgerflüssigkeit abgetrennt wird, beispielsweise im Schwerefeld mit einer Flotationsvorrichtung oder im Fliehkraftfeld mit einem Dekanter.

Eine besonders bevorzugt Ausführungsform besteht darin, daß das Aerogel durch Ausnutzung des Auftriebes in der Wärmeträgerflüssigkeit an deren Oberfläche geführt und dort abgeschöpft wird. Dazu wird das Verfahren vorzugsweise in einem Flotationsbecken durchgeführt.

Gegenstand der Erfindung ist daher auch eine Vorrichtung zur Durchführung des oben beschriebenen Verfahrens enthaltend ein- direkt oder indirekt - beheizbares Flotationsbecken, in dem sich die Wärmeträgerflüssigkeit befindet, und eine pneumatische Einspeisung zum Einbringen des Lyogels in die Wärmeträgerflüssigkeit.

In einer weiteren Ausführungsform des erfindungsgemäßen Verfahrens wird das Lyogel, beispielsweise auf einem Bandfilter, vorgelegt und die Wärmeträgerflüssigkeit, beispielsweise durch Aufsprühen oder Aufspritzen mittels einer Waschvorrichtung, aufgebracht.

Gegenstand der Erfindung ist daher auch eine Vorrichtung zur Durchführung des oben beschriebenen Verfahrens, enthaltend einen Bandfilter zur Aufnahme des Lyogels und eine Waschvorrichtung, mit deren Hilfe die Wärmeträgerflüssigkeit auf das Lyogel aufgebracht wird.

Vorzugsweise wird das durch die Trocknung erhaltene Aerogel innerhalb von 2 Minuten, besonders bevorzugt innerhalb von 10 Sekunden, von der Wärmeträgerflüssigkeit abgetrennt.

Die erfindungsgemäß getrockneten Aerogele finden beispielsweise Verwendung als Wärme- und Schalldämmstoffe, als Katalysatorträger und als Adsorbentien.

Zur Durchführung des erfindungsgemäßen Verfahrens können einzelne oder mehrere Merkmale aus den Ausführungsformen beliebig kombiniert werden.

Die in der Beschreibung aufgeführten Druckschriften sollen durch Zitat als Bestandteil der Beschreibung gelten, dies gilt insbesondere für die Vorschriften zur Herstellung des Ausgangslyogels.

Nachstehend wird das erfindungsgemäße Verfahren anhand von Ausführungsbeispielen näher beschrieben.

### Beispiel 1

Eine 8 Gew.-%ige SiO₂ Lösung wird durch Verdünnung von 75 ml handelsüblicher Natrium-Wasserglas-Lösung (Hoechst) mit 224 ml deionisiertem Wasser hergestellt. Natrium-Ionen werden dadurch entfernt, daß die Lösung durch ein Ionenaustauscherharz (Rohm and Haas Amberlite) geleitet wird. Das Harz befindet sich in einer senkrechten Doppelmantelsäule mit 50 cm Höhe und 1 cm innerem Durchmesser. Der Doppelmantel der Säule wird auf 10°C thermostatisiert. Vor der Sol-Synthese wird die Säule mit mehreren Volumina deionisierten Wassers gewaschen. Die Natrium-Wasserglas-Lösung wird der Säule mit einem kontrollierten Volumenstrom zugeführt und abgezogen. Die Wasserglas-Lösung wird verworfen, bis der pH-Wert einen Bereich von 2,5 bis 2,9 erreicht. Das SiO₂-Sol wird gesammelt, bis die Austauschkapazität des Harzes erreicht wird. Das Harz wird für spätere Anwendungen regeneriert, indem mit deionisiertem Wasser, in Folge mit 5 Gew.-%iger NaOH-Lösung, mit 5 Gew. %-iger HCl-Lösung und wieder mit deionisiertem Wasser gespült wird, bis der pH-Wert ca. 5 beträgt.

Der pH-Wert der SiO₂-Lösung wird durch kontrollierte Zugabe von 1M-NaOH auf 5 angehoben, um die Gelierung zu starten. Vor der Gelierung wird die Lösung in zylindrische Gefäße gefüllt. Nach 30 Minuten werden die Gelzylinder aus den Gefäßen entfernt und in abgeschlossene mit Wasser gefüllte Gefäße gegeben. Diese Gefäße werden in einen Ofen gegeben, um das Gel 4 Stunden bei 80°C zu altern. Nach der Alterung wird das Gel auf Raumtemperatur abgekühlt.

Die Gelzylinder werden mehrfach mit Aceton gespült. Das Aceton wird dann in gleicher Weise mit n-Heptan aus dem Gel gewaschen. Üblich sind dabei jeweils drei Waschstufen. Nach dem letzten Waschschritt, wird das Gel mit einer Lösung aus n-Heptan und 1 bis 10 Gew.-% Trimethylchlorsilan (TMCS) behandelt. Die Lösung wird in einer solchen Menge zum Gel hinzugegeben, daß sich ein Verhältnis von 8 bis 50 Gew.-% TMCS bezogen auf das Naßgel ergibt. Das Gel wird über Nacht in der Lösung belassen.

Die so hydrophobisierten heptanfeuchten Lyogelzylinder werden in einem Hohlkörper bestehend aus Siebgewebe eingeschlossen. Der Hohlkörper wird in ein Gefäß mit kochendem Wasser eingetaucht. Durch den Kontakt mit dem Wasser erhitzt sich das Heptan im Gel und verdampft rasch. Die Gelpartikel brechen durch die inneren Druckgradienten im Partikel, die sich durch die schnelle Verdampfung der Porenflüssigkeit aufbauen, auseinander. Innerhalb von wenigen Sekunden steigt das feine Gel als trockenes Material zur Wasseroberfläche auf. Da das getrocknete Aerogel weniger als ein Zehntel der Dichte von Wasser besitzt und hydrophob ist, schwimmt es auf der Wasseroberfläche auf und kann mit einem feinen Sieb abgeschöpft werden.

Das Heptan aus den Gelporen, das in Wasser unlöslich ist, steigt in kleinen Dampfblasen im Wasser nach oben und wird in einem Kondensator niedergeschlagen. Das getrocknete Gel ist ein lockeres Pulver und besitzt ein weißes, kreideartiges Aussehen. Das Material weist eine Rütteldichte von 80 kg/m³ und eine BET-Oberfläche (N₂) von 600 m²/g auf.

### Beispiel 2

Das Gel wird in gleicher Weise synthetisiert und behandelt wie in Beispiel 1, mit folgenden Ausnahmen: n-Hexan wird anstelle von n-Heptan als zweites Lösungsmittel verwendet; nach dem letzten Waschschritt wird das Gel mit einer Lösung aus n-Hexan und 1 bis 10 Gew.-% TMCS behandelt und die TMCS-Hexan-Lösung wird in einer solchen Menge zum Gel hinzugegeben, daß sich ein Verhältnis von 5 bis 15 Gew.-% TMCS bezogen auf das Naßgel ergibt.

Das Hexan aus den Gelporen, das in Wasser unlöslich ist, steigt in kleinen Dampfblasen im Wasser nach oben und wird in einem Kondensator niedergeschlagen. Das getrocknete Gel ist ein lockeres Pulver und besitzt ein weißes, kreideartiges Aussehen. Das Material weist eine Rütteldichte von 85 kg/m³ und eine BET-Oberfläche (N₂) von 600 m²/g auf.

### Beispiel 3

Das Gel wird in gleicher Weise synthetisiert und behandelt wie in Beispiel 1, mit folgenden Ausnahmen: n-Pentan wird anstelle von n-Heptan als zweites Lösungsmittel verwendet; nach dem letzten Waschschritt wird das Gel mit einer Lösung aus n-Pentan und 1 bis 10 Gew.-% TMCS behandelt und die TMCS-Pentan-Lösung wird in einer solchen Menge zum Gel hinzugegeben, daß sich ein Verhältnis von 5 bis 15 Gew.-% TMCS bezogen auf das Naßgel ergibt.

Das Pentan aus den Gelporen, das in Wasser unlöslich ist, steigt in kleinen Dampfblasen im Wasser nach oben und wird in einem Kondensator niedergeschlagen. Das getrocknete Gel ist ein lockeres Pulver und besitzt ein weißes, kreideartiges Aussehen. Das Material weist eine Rütteldichte von 83 kg/m³ und eine BET-Oberfläche (N₂) von 590 m²/g auf.

### Beispiel 4

Das Gel wird in gleicher Weise synthetisiert und behandelt wie in Beispiel 1, mit folgenden Ausnahmen: die TMCS-Heptan-Lösung wird in einer solchen Menge zum Gel hinzugegeben, daß sich ein Verhältnis von 10 Gew.-% TMCS bezogen auf das Naßgel ergibt; anstelle von Wasser wird Ethylenglykol als Wärmeträgerflüssigkeit verwendet. Die hydrophobisierten heptanfeuchten Lyogelzylinder werden in einem Hohlkörper bestehend aus Siebgewebe eingeschlossen. Der Hohlkörper wird in ein Gefäß mit kochendem Glykol eingetaucht. Durch den Kontakt mit dem Glykol erhitzt sich das Heptan im Gel und verdampft rasch. Die Gelpartikel brechen durch die inneren Druckgradienten im Partikel, die sich durch die schnelle Verdampfung der Porenflüssigkeit aufbauen, auseinander. Innerhalb von wenigen Sekunden steigt das feine Gel als trockenes Material zur Glykoloberfläche auf. Da das getrocknete Aerogel weniger als ein Zehntel der Dichte von Glykol besitzt und hydrophob ist, schwimmt es auf der Glykoloberfläche auf und kann mit einem feinen Sieb abgeschöpft werden.

Das getrocknete Gel ist ein lockeres Pulver und besitzt ein weißes, kreideartiges Aussehen. Das Material weist eine Rütteldichte von 90 kg/m³ und eine BET-Oberfläche (N₂) von 590 m²/g auf.

### Beispiel 5

Das Gel wird in gleicher Weise synthetisiert und behandelt wie in Beispiel 1, mit folgender Ausnahme: die TMCS-Heptan-Lösung wird in einer solchen Menge zum Gel hinzugegeben, daß sich ein Verhältnis von 10 Gew.-% TMCS bezogen auf das Naßgel ergibt; anstelle von Wasser wird Glycerin als Wärmeträgerflüssigkeit verwendet. Die hydrophobisierten heptanfeuchten Lyogelzylinder werden in einem Hohlkörper bestehend aus Siebgewebe eingeschlossen. Der Hohlkörper wird in ein Gefäß mit kochendem Glycerin eingetaucht. Durch den Kontakt mit dem Glycerin erhitzt sich das Heptan im Gel und verdampft rasch. Die Gelpartikel brechen durch die inneren Druckgradienten im Partikel, die sich durch die schnelle Verdampfung der Porenflüssigkeit aufbauen, auseinander. Innerhalb von wenigen Sekunden steigt das feine Gel als trockenes Material zur Glycerinoberfläche auf. Da das getrocknete Aerogel weniger als ein Zehntel der Dichte von Glycerin besitzt und hydrophob ist, schwimmt es auf der Glycerinoberfläche auf und kann mit einem feinen Sieb abgeschöpft werden.

Das getrocknete Geist ein lockeres Pulver und besitzt ein weißes, kreideartiges Aussehen. Das Material weist eine Rütteldichte von 75 kg/m³ und eine BET-Oberfläche (N₂) von 570 m²/g auf.

## Patentansprüche

1. Verfahren zur unterkritischen Trocknung eines Lyogels zu einem Aerogel, dadurch gekennzeichnet, daß man das Lyogel mit einer Wärmeträgerflüssigkeit behandelt, die eine Temperatur oberhalb der Siedetemperatur der Porenflüssigkeit des Lyogels unter Systemdruck aufweist, und das getrocknete Aerogel anschließend von der Wärmeträgerflüssigkeit abtrennt.

2. Verfahren nach Anspruch 1, dadurch gekennzeichnet, daß die Wärmeträgerflüssigkeit nicht oder nur teilweise mit der Porenflüssigkeit des Lyogels mischbar ist.

3. Verfahren nach Anspruch 1 oder 2, dadurch gekennzeichnet, daß zur Trocknung eine Wärmeträgerflüssigkeit gewählt wird, die das trockene Aerogel kaum oder nicht benetzt.

4. Verfahren nach mindestens einem der vorgehenden Ansprüche, dadurch gekennzeichnet, daß man SiO₂ -Lyogele trocknet, die durch Oberflächenmodifikation hydrophobisiert wurden.

5. Verfahren nach mindestens einem der vorhergehenden Ansprüche, dadurch gekennzeichnet, daß als Wärmeträgerflüssigkeit Wasser verwendet wird.

6. Verfahren nach mindestens einem der vorhergehenden Ansprüche, dadurch gekennzeichnet, daß das getrocknete Aerogel unter Ausnutzung des Dichteunterschieds zwischen feuchtem und getrocknetem Material aus der Wärmeträgerflüssigkeit abgetrennt wird.

7. Verfahren nach Anspruch 6, dadurch gekennzeichnet, daß das Aerogel durch Ausnutzung des Auftriebes in der Wärmeträgerflüssigkeit an deren Oberfläche geführt und dort abgeschöpft wird.

8. Verfahren nach mindestens einem der Ansprüche 1 bis 5, dadurch gekennzeichnet, daß man das Lyogel auf einem Bandfilter vorlegt und die Wärmeträgerflüssigkeit mittels einer Waschvorrichtung auf das Lyogel aufbringt.

## Claims

1. A method for the subcritical drying of a lyogel to produce an aerogel, characterised in that the lyogel is treated with a heat carrier fluid which is at a temperature above the boiling temperature of the pore fluid of the lyogel under system pressure, the dried aerogel then being separated from the heat carrier fluid.

2. A method according to claim 1, characterised in that heat carrier fluid is not or is only partially miscible with the pore fluid of the lyogel.

3. A method according to claim 1 or 2, characterised in that for drying, a heat carrier fluid is chosen which does not or only scarcely wets the dry aerogel.

4. A method according to at least one of the preceding claims, characterised in that SiO₂ lyogels are dried which have been rendered hydrophobic by surface modification.

5. A method according to at least one of the preceding claims, characterised in that water is used as the heat carrier fluid.

6. A method according to at least one of the preceding claims, characterised in that the dried aerogel is separated from the heat carrier fluid by using the difference in density between moist and dry material

7. A method according to at least claim 6, characterised in that the aerogel is conveyed by its buoyancy to the surface of the heat carrier fluid, where it is skimmed off.

8. A method according to at least one of claims 1 to 5, characterised in that the lyogel is presented on a belt filter and the heat carrier fluid is applied to the lyogel by means of a washing apparatus.

## Revendications

1. Procédé de séchage sous-critique d'un lyogel pour former un aérogel, caractérisé en ce qu'on traite le lyogel avec un fluide caloporteur qui présente une température intérieure à la température d'ébullition du liquide des pores du lyogel à la pression du système, et en ce qu'on sépare ensuite l'aérogel séché du fluide caloporteur.

2. Procédé selon la revendication 1, caractérisé en ce que le fluide caloporteur n'est pas miscible ou seulement partiellement avec le liquides des pores du lyogel.

3. Procédé selon la revendication 1 ou 2, caractérisé en ce qu'on choisit pour le séchage un fluide caloporteur qui ne mouille pas ou presque pas l'aérogel sec.

4. Procédé selon au moins une des revendications précédentes, caractérisé en ce qu'on sèche des lyogels de SiO₂, qui ont été rendus hydrophobes par modification de leur surface.

5. Procédé selon au moins une des revendications précédentes, caractérisé en ce qu'on utilise l'eau comme fluide caloporteur.

6. Procédé selon au moins une des revendications précédentes, caractérisé en ce qu'on sépare l'aérogel séché du fluide caloporteur en utilisant la différence de densité entre le matériau humide et sec.

7. Procédé selon la revendication 6, caractérisé en ce qu'on amène l'aérogel à la surface du fluide caloporteur en utilisant la poussée d'Archimède et en ce qu'on l'enlève de dessus le liquide.

8. Procédé selon au moins une des revendications 1 à 5, caractérisé en ce qu'on dépose le lyogel sur un filtre à bande et en ce qu'on applique le fluide caloporteur sur le lyogel au moyen d'un dispositif de lavage.
